# FASCICULE DE BREVET EUROPEEN

(11) **EP 3 862 551 B1**
(45) Date de publication et mention de la délivrance du brevet: **30.11.2022**
(21) Numéro de dépôt: 21153615.6
(22) Date de dépôt: 26.01.2021
(51) Int. Cl.: F02C 7/06, F02C 7/32, F01D 25/18, F16H 57/04

(54) **BOÎTIER DE RELAIS D'ACCESSOIRES POUR UNE TURBOMACHINE**
ZUBEHÖR-RELAISKASTEN FÜR EINE TURBOMASCHINE
ACCESSORIES RELAY HOUSING FOR A TURBINE ENGINE

(30) Priorité: 10.02.2020 FR 2001314
(43) Date de publication de la demande: 11.08.2021
(73) Titulaire: Safran Transmission Systems, 92700 Colombes (FR)
(72) Inventeur: DE DREUILLE DE LONGEVILLE, Thomas, Marie, Joseph, 77550 MOISSY-CRAMAYEL (FR); GUILLEMONT, Maxence, Gérard, Claude, 77550 MOISSY-CRAMAYEL (FR)
(74) Mandataire: Ernest Gutmann - Yves Plasseraud S.A.S.

(56) Documents cités:
- WO-A1-2018/100259
- JP-A- H02 221 762
- JP-A- 2013 194 891
- US-A1- 2013 333 506

## Description

### Domaine technique de l'invention

L'invention concerne un boîtier de relais d'accessoires pour une turbomachine, en particulier pour un aéronef.

### Etat de la technique antérieure

Une turbomachine comporte classiquement, d'amont en aval dans le sens de circulation des gaz au sein de la turbomachine, une soufflante, un ou plusieurs étages de compression, par exemple un compresseur basse pression et un compresseur haute pression, une chambre de combustion, un ou plusieurs étages de turbine, par exemple une turbine haute pression et une turbine basse pression, et une tuyère d'échappement des gaz. Chaque compresseur est relié à une turbine par un arbre, de manière à former par exemple un corps haute pression et un corps basse pression.

Une partie de la puissance générée par la turbomachine est utilisée pour alimenter en énergie différents équipement de la turbomachine. Cette puissance est prélevée mécaniquement sur l'arbre du corps haute pression de la turbomachine, par un arbre de transmission de puissance qui entraîne un arbre d'entrée du boîtier de relais d'accessoires. Le document JP2013194891 divulgue un boîtier de relais d'accessoires selon l'art antérieur.

Le document FR 3 070 726, au nom de la Demanderesse, divulgue un boîtier de relais d'accessoires, également connu sous l'acronyme anglais AGB pour « *Auxiliary GearBox »,* destiné à une turbomachine d'un aéronef.

Un tel boîtier comporte un boîtier délimitant un volume interne dans lequel sont logés des engrenages formés de roues dentées. Les engrenages sont entraînés par l'arbre de transmission de puissance, lui-même entraîné par la turbine de la turbomachine. Les différents engrenages sont destinés à entraîner des accessoires, généralement fixés au moins en partie sur le boîtier précité.

Les accessoires ou équipements concernés comportent par exemple un générateur électrique, un starter, un alternateur, une pompe hydraulique, à carburant ou à huile.

Le boîtier comporte deux faces latérales amont et aval, décalées axialement l'une de l'autre. Les termes axial, radial et circonférentiel sont définis par rapport à l'axe de la turbomachine. Les termes amont et aval sont définis par rapport au sens de circulation des gaz au sein de la turbomachine. Enfin, les termes haut et bas sont définis par rapport à la gravité ou champ de pesanteur terrestre.

Le boîtier d'accessoires comporte classiquement une ou plusieurs conduites destinées à la circulation d'huile, traversant axialement tout ou partie du volume interne du boîtier.

L'huile circulant dans la conduite peut être utilisée pour alimenter un ou plusieurs accessoires, ou pour lubrifier les engrenages, roulements et cannelures.

Le boîtier peut être réalisé par fonderie ou par usinage. Le boîtier est généralement formé de plusieurs pièces, par exemple de deux demi-coquilles, assemblées l'une à l'autre de façon étanche et délimitant le volume interne du boîtier.

Il existe aujourd'hui un besoin de faciliter l'écoulement de l'huile vers la zone basse du volume interne délimité par le boîtier tout en facilitant la réalisation et le montage du boîtier de relais d'accessoires. La fonction est assurée par une paroi isolant le fond de la cavité interne de la ventilation des pièces tournantes.

### Présentation de l'invention

A cet effet, l'invention concerne un boîtier de relais d'accessoires pour une turbomachine selon la revendication 1.

L'utilisation d'un déflecteur permet de limiter les perturbations générées par les flux d'air engendrés par la rotation des dentures sur l'écoulement de l'huile, de façon à faciliter l'écoulement de l'huile en direction de la partie basse du boîtier. Les termes haut et bas sont définis par rapport à la gravité ou champ de pesanteur terrestre. Par ailleurs, les termes axial, radial et circonférentiel sont définis par rapport à l'axe de la turbomachine.

La réalisation de la conduite et du déflecteur en une seule pièce permet de faciliter la réalisation et le montage du boîtier de relais d'accessoires.

Dans le cas d'un boîtier réalisé par fonderie, la réalisation d'un déflecteur avec le boîtier complique le procédé de fabrication et nécessite l'utilisation de noyaux additionnel. L'invention permet dans ce cas de réaliser un boîtier de structure simple, par fonderie, puis y adjoindre un ensemble formé par la conduite et le déflecteur.

Par ailleurs, dans le cas d'un boîtier réalisé par usinage, la réalisation d'un déflecteur avec le boîtier permet d'éviter le montage du déflecteur sur le boîtier, par exemple par l'intermédiaire de boulons, de vis ou de rivets, indépendamment de la conduite, de façon à limiter le nombre de pièces et la masse du boîtier de relais d'accessoires et faciliter son montage.

Le déflecteur peut s'étendre entre au moins un engrenage et une paroi inférieure du volume interne.

Le déflecteur peut présenter une surface concave ou convexe, dans la direction circonférentielle et/ou dans la direction axiale.

L'ensemble formé par la conduite et le déflecteur peut comporter des moyens de blocage en rotation de l'ensemble par rapport au boîtier.

Les moyens de blocage en rotation permettent de garantir le bon positionnement du déflecteur par rapport aux engrenages notamment du boîtier d'accessoires.

Les moyens de blocage en rotation peuvent comporter un méplat formé sur une partie de la conduite et coopérant avec une zone de blocage de forme complémentaire du boîtier, ou inversement.

Les moyens de blocage en rotation peuvent comporter une fixation par vis dans l'une des faces latérales.

La conduite peut présenter une forme générale cylindrique. Le méplat peut être formé au niveau d'une extrémité de la conduite.

L'ensemble formé par la conduite et le déflecteur peuvent comporter au moins un raidisseur s'étendant, au moins en partie, sur le déflecteur et sur la conduite.

Le raidisseur peut s'étendre circonférentiellement. Le raidisseur peut être situé sous le déflecteur, c'est-à-dire entre le déflecteur et la zone inférieure du volume interne du boîtier. L'ensemble peut comporter au moins deux raidisseurs écartés axialement l'un de l'autre.

Le boîtier de relais d'accessoires peut comporter un premier déflecteur et un second déflecteur s'étendant selon une direction opposée de part et d'autre de la conduite.

Le déflecteur peut s'étendre axialement sur toute la distance axiale entre les faces latérales. En d'autres termes, les deux bords latéraux des déflecteurs viennent au contact des faces latérales correspondantes du boîtier.

Le déflecteur peut s'étendre axialement sur une partie seulement de la distance axiale entre les faces latérales.

L'un au moins des deux bords latéraux du déflecteur peut ainsi être situé à distance de la face latérale correspondante, de manière à former un jeu facilitant l'écoulement de l'huile entre le déflecteur et le boîtier latéral.

En variante, le déflecteur peut comporter au moins une ouverture. Cette ouverture peut autoriser le passage d'huile en direction de la zone basse du volume interne.

La conduite traverse axialement le volume interne et chacune des faces latérales.

La conduite peut être engagée de manière étanche au travers de l'une au moins des faces latérales, par l'intermédiaire d'au moins un joint torique situé entre la conduite et la face latérale correspondante.

En variante, au moins une conduite débouche dans le volume interne du boîtier, via un gicleur. La conduite peut comporter une partie s'étendant circonférentiellement et conformée au déflecteur.

La conduite peut comporter au moins un gicleur radial, situé à proximité d'au moins une roue dentée des engrenages.

Le boîtier de relais d'accessoire peut comporter une première conduite traversant axialement le boîtier au travers des faces latérales et une seconde conduite traversant l'une seulement des faces latérales et débouchant dans le volume interne du boîtier par l'intermédiaire d'au moins un gicleur, par exemple de plusieurs gicleurs. Au moins un gicleur peut être orienté de façon à déboucher en regard d'un palier supportant un axe d'une roue dentées. L'axe peut être un axe creux. Le palier peut être un roulement, par exemple un roulement à billes ou à rouleaux.

En variante, au moins un gicleur peut déboucher en regard de la denture.

La conduite, par exemple la seconde conduite, peut comporter une partie d'entrée s'étendant axialement au travers d'une face latérale du boîtier et une partie s'étendant circonférentiellement.

La partie axiale peut déboucher à une extrémité circonférentielle de la partie circonférentielle, l'autre extrémité circonférentielle de la partie circonférentielle étant reliée fluidiquement ou débouchant dans une autre conduite, par exemple dans la première conduite, de sorte que les gicleurs peuvent être alimentés par la première conduite ou par la partie axiale de la seconde conduite, au travers de la partie circonférentielle.

Les gicleurs peuvent être agencés par paires, les différentes paires étant décalées circonférentiellement les unes par rapport aux autres. Les gicleurs d'une même paire peuvent être orientés à l'opposé l'un de l'autre, en regard respectivement d'un palier amont et d'un palier aval.

Le déflecteur peut présenter une forme générale en V, de façon à s'adapter à la courbure des roues dentées.

La conduite peut également entourer, au moins en partie, une roue dentée d'un engrenage ou un palier supportant et guidant en rotation un axe supportant une roue dentée.

L'invention concerne également une turbomachine pour un aéronef, comportant un boîtier de relais d'accessoires du type précité.

La turbomachine peut être un turboréacteur ou un turbopropulseur.

L'invention concerne également un aéronef comportant une turbomachine du type précité.

### Brève description des figures

[Fig. 1] est une vue schématique d'un boîtier de relais d'accessoires pour une turbomachine,
[Fig. 2] est une vue en perspective d'une partie du boîtier de relais d'accessoires,
[Fig. 3] est une vue en perspective d'une partie du boîtier de relais d'accessoires
[Fig. 4] est une vue en perspective d'un ensemble formé par la conduite et les déflecteurs,
[Fig. 5] est une vue en perspective d'un ensemble formé par la conduite et les déflecteurs,
[Fig. 6] est une vue en en perspective d'une partie d'un boîtier de relais d'accessoires selon une autre forme de réalisation
[Fig. 7] est une vue en en coupe axiale dudit boîtier de relais d'accessoires,
[Fig. 8] est une vue en en coupe radiale d'une partie dudit boîtier de relais d'accessoires de la figure 6.

### Description détaillée de l'invention

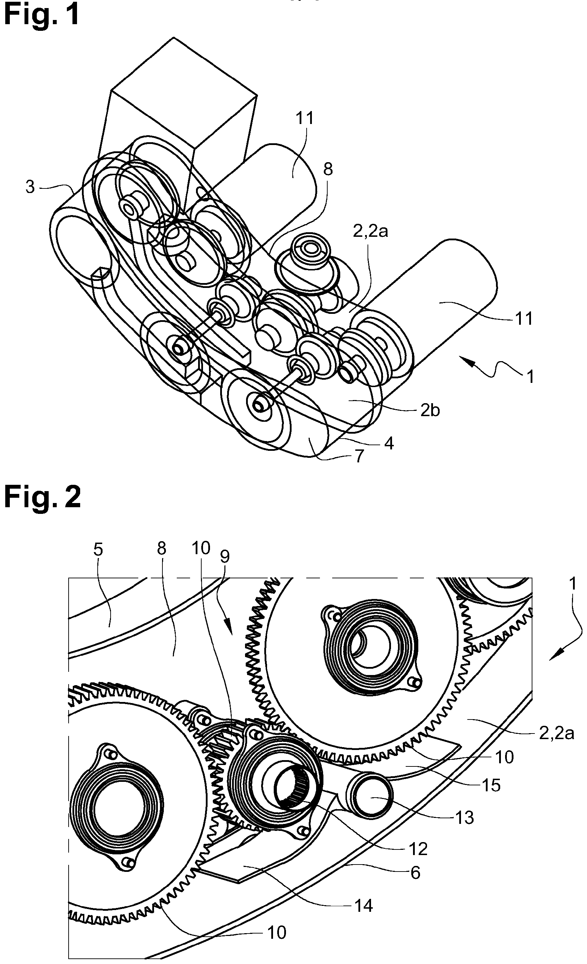

Les figures 1 à 3 illustrent un boîtier de relais d'accessoires 1 selon une forme de réalisation, dénommé ci-après par l'acronyme AGB. Cet AGB 1 est destiné à équiper une turbomachine. Il comporte un boîtier 2 ou carter de forme générale en arc de cercle dont l'axe est l'axe de la turbomachine. Le boîtier 2 comporte deux extrémités circonférentielles 3, 4, une face ou un bord radialement interne 5, une face ou un bord radialement externe 6 et deux faces radiales amont 7 et aval 8, appelées faces latérales. Le boîtier 2 peut être formé de deux demi-coquilles 2a, 2b assemblées de façon étanche l'une à l'autre et réalisées par fonderie ou par usinage. Le boîtier 2 délimite un volume interne 9 dans lequel sont logés des engrenages formés par des roues dentées 10.

Une partie de la puissance générée par la turbomachine est prélevée mécaniquement sur l'arbre du corps haute pression de la turbomachine, par un arbre de transmission de puissance qui entraîne un arbre d'entrée du boîtier de relais d'accessoires 1, entraînant lui-même les engrenages 10. Les différents engrenages 10 sont destinés à entraîner des accessoires 11, généralement fixés au moins en partie sur le boîtier 2 ou sur une partie fixe de la turbomachine. Les accessoires ou équipements concernés comportent par exemple un générateur électrique, un starter, un alternateur, une pompe hydraulique, à carburant ou à huile. Les accessoires peuvent comporter des arbres coopérant avec des cannelures 12 de certaines des roues dentées 10.

De l'huile issu d'un circuit de lubrification est injectée dans le volume interne 9, au niveau des roues dentées 10 des engrenages par exemple, de façon à lubrifier les engrenages. L'huile de lubrification est collectée au niveau d'une zone basse ou inférieure du boîtier 2 située ici du côté du bord radialement externe 6, puis est renvoyée vers le circuit de lubrification. Selon un mode de réalisation qui n'est pas couvert par les revendications, le boîtier 2 peut être traversé axialement, au moins en partie, par au moins une conduite 13 destinée à la circulation d'huile. La conduite 13 peut par exemple traverser une face latérale 7, 8 et déboucher à une extrémité libre dans le volume interne 9, en regard des engrenages, de manière à lubrifier les roues dentées 10. Dans ce cas, la conduite 13 peut former un gicleur.

Selon l'invention, la conduite 13 traverse entièrement les faces latérales 7, 8 et le volume interne 9 du boîtier 2. Dans un tel cas, la conduite 13 peut servir à conduire de l'huile d'une première zone de la turbomachine, située d'un premier côté du boîtier 2, jusqu'à une seconde zone ou à un équipement, situé d'un second côté du boîtier 2.

La conduite 13 peut être située en partie basse du boîtier 2, par exemple à proximité de la face formant le bord radialement externe 6. La conduite 13 peut présenter une section cylindrique. La conduite 13 peut traverser de façon étanche des ouvertures ménagées dans les faces latérales 7, 8, par l'intermédiaire de joints toriques disposés entre la conduite 13 et les faces latérales 7, 8.

La conduite 13 peut comporter une collerette 14 s'étendant radialement vers l'extérieur depuis le reste de la conduite 13, ladite collerette 14 comportant un méplat 15 coopérant avec une zone de forme complémentaire du boîtier 2, de façon à immobiliser en rotation la conduite 13 par rapport au boîtier 2.

L'AGB comporte en outre un ou plusieurs déflecteurs 14, 15 permettant de limiter les perturbations générées par les flux d'air engendrés par la rotation des roues dentées 10 par exemple sur l'écoulement de l'huile, de façon à faciliter l'écoulement de l'huile en direction de la partie basse du boîtier 2.

Comme cela est visible sur les figures 2 à 5, dans la forme de réalisation illustrée, deux déflecteurs 14, 15 s'étendent chacun selon une direction opposée de part et d'autre de la conduite 13. Chaque déflecteur 14, 15 vient de matière avec la conduite 13.

Chaque déflecteur 14, 15 se présente sous la forme d'une lame de forme générale concave, dont la concavité est tournée en direction des engrenages 10. Les déflecteurs 14, 15 sont ainsi situés radialement entre les engrenages 10 et l'un des bords radialement interne 5 ou externe 6 du boîtier 2, ici le bord radialement externe 6. Chaque déflecteur 14, 15 s'étend sur une partie seulement de la distance axiale entre les faces latérales 7, 8 ou, au contraire, sur toute la distance axiale entre les faces latérales 7, 8. Les déflecteurs 14, 15 peuvent présenter des dimensions différentes et/ou des formes différentes.

La zone concave de chaque déflecteur 14, 15 est située en regard d'une roue dentée 10.

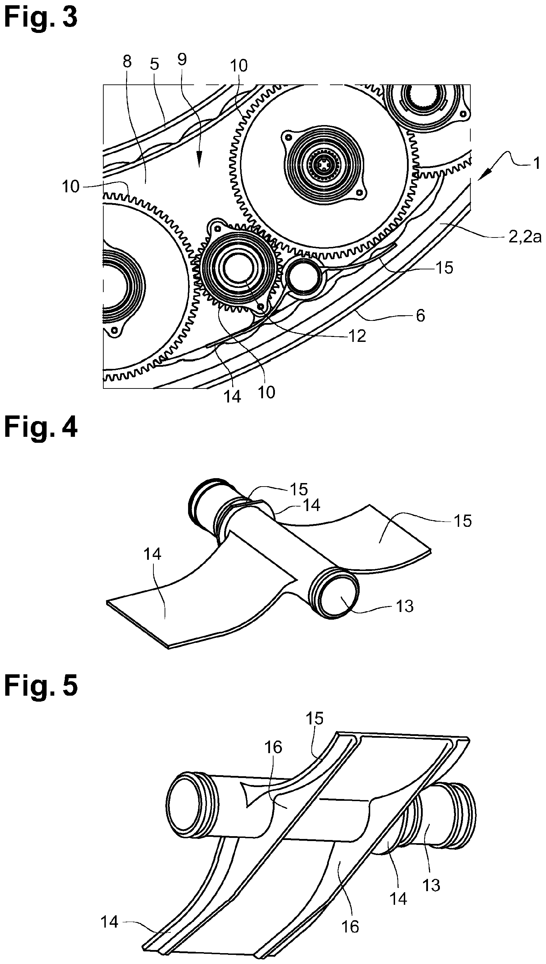

L'ensemble formé par la conduite 13 et les déflecteurs 14, 15 comporte en outre au moins un raidisseur 16, ici deux raidisseurs 16 (figure 5), s'étendant au niveau des faces convexes des raidisseurs 16, dans les zones de liaison entre les déflecteurs 14, 15 et la conduite 13, et/ou au niveau de la conduite 13. Le rôle des raidisseurs 16 est d'améliorer la tenue mécanique de l'ensemble. Un même raidisseur 16 peut s'étendre d'une extrémité circonférentielle libre d'un déflecteur 14 à l'autre 16. Chaque raidisseur peut être formé par une paroi ou nervure s'étendant radialement.

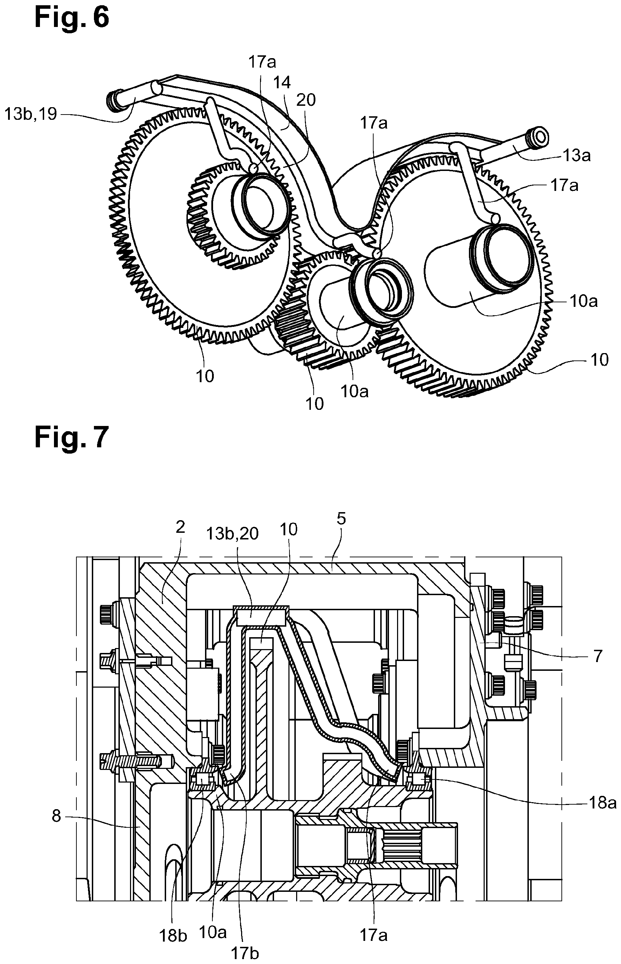

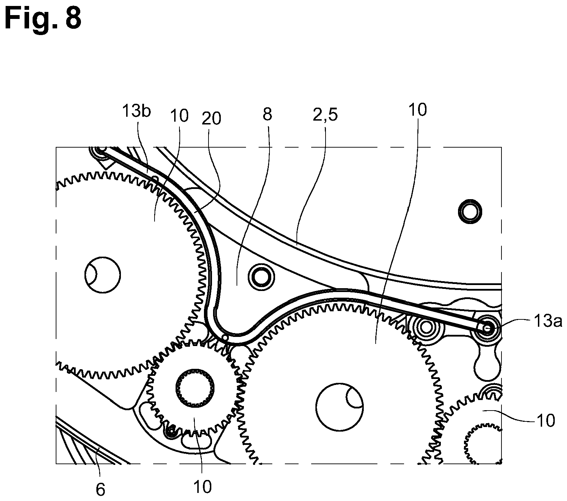

Les figures 6 à 8 illustrent un boîtier de relais d'accessoires 1 selon une autre forme de réalisation. Cette forme de réalisation diffère de celle décrite précédemment en ce que l'ensemble comporte une conduite 13a traversant axialement le boîtier 2 au travers des faces latérales 7, 8. Une autre conduite 13b traverse l'une seulement des faces latérales 7, 8 et débouche dans le volume interne 9 du boîtier 2 par l'intermédiaire de gicleurs 17a, 17b. Dans cette forme de réalisation, les gicleurs 17a, 17b sont orientés de façon à déboucher en regard de paliers amont 18a et aval 18b (figure 7) supportant des axes 10a de roues dentées 10. Les paliers 18a, 18b peuvent être des roulements, par exemple des roulements à billes ou à rouleaux.

En variante, l'un au moins des gicleurs 17a, 17b peut déboucher en regard de la denture.

La conduite 13b comporte une partie d'entrée 19 (figure 6) s'étendant axialement au travers de la face latérale 8 et une partie 20 s'étendant circonférentiellement à l'intérieur du volume 10 du boîtier 2, distribuant l'huile vers les différents gicleurs 17a, 17b.

Dans cette forme de réalisation, la partie axiale 19 débouche à une extrémité circonférentielle de la partie 20, l'autre extrémité circonférentielle de la partie 20 étant reliée fluidiquement ou débouchant dans la conduite 13a de sorte que les gicleurs peuvent être alimentés par la conduite 13a ou par la partie axiale 19 de la conduite 13b, au travers de la partie circonférentielle 20.

Les gicleurs 17a, 17b sont ici agencés par paires, les différentes paires étant décalées circonférentiellement les unes par rapport aux autres. Les gicleurs 17a, 17b d'une même paire sont orientés à l'opposé l'un de l'autre, en regard respectivement d'un palier amont 18a et d'un palier aval 18b. La partie circonférentielle 20 est conformée au déflecteur 14. L'ensemble comporte ici un déflecteur 14 présentant une forme générale en V, vue de l'amont ou de l'aval, de façon à s'adapter à la courbure des roues dentées 10. Comme précédemment, le déflecteur 14 est situé entre les roues dentées 10 et un bord radialement interne 5 ou externe 6 du boîtier 2, ici le bord radialement interne 5.

La canalisation 20 est également dotée de gicleurs directement radiaux et à proximité des roues dentées 10.

## Revendications

1. Boîtier de relais d'accessoires (1) pour une turbomachine comportant un boîtier (2) délimitant un volume interne (9) dans lequel sont logés des engrenages (10), le boîtier (2) comportant deux faces latérales (7, 8) décalées axialement l'une de l'autre selon un axe correspondant à l'axe de la turbomachine, le boîtier (2) comportant au moins une conduite (13) de circulation d'huile traversant au moins une face latérale et s'étendant dans ledit volume interne (9), **caractérisé en ce que** le boîtier (2) comporte au moins un déflecteur (14, 15) d'huile s'étendant, depuis la conduite (13), dans ledit volume interne (9), le déflecteur (14, 15) et la conduite (13) étant réalisés en une seule pièce, la conduite (13) traversant axialement le volume interne (9) et chacune des faces latérales (7, 8).

2. Boîtier de relais d'accessoires (1) selon la revendication 1, **caractérisé en ce que** le déflecteur (14, 15) s'étend entre au moins un engrenage (10) et une paroi inférieure du volume interne (9).

3. Boîtier de relais d'accessoires (1) selon la revendication 1 ou 2, **caractérisé en ce que** l'ensemble formé par la conduite (13) et le déflecteur (14, 15) comporte des moyens de blocage en rotation (15) de l'ensemble par rapport au boîtier (2).

4. Boîtier de relais d'accessoires (1) selon la revendication 3, **caractérisé en ce que** les moyens de blocage en rotation comportent un méplat (15) formé sur une partie (14) de la conduite (13) et coopérant avec une zone de blocage de forme complémentaire du boîtier (2), ou inversement.

5. Boîtier de relais d'accessoires (1) selon la revendication 3, **caractérisé en ce que** les moyens de blocage en rotation comportent une fixation par vis dans l'une des faces latérales (7, 8).

6. Boîtier de relais d'accessoires (1) selon l'une des revendications 1 à 4, **caractérisé en ce que** l'ensemble formé par la conduite (13) et le déflecteur (14, 15) comporte au moins un raidisseur (16) s'étendant, au moins en partie, sur le déflecteur (14, 15) et sur la conduite (13).

7. Boîtier de relais d'accessoires (1) selon l'une des revendications 1 à 5, **caractérisé en ce qu'**il comporte un premier déflecteur (14, 15) et un second déflecteur (14, 15) s'étendant selon une direction opposée de part et d'autre de la conduite (13).

8. Boîtier de relais d'accessoires (1) selon l'une des revendications 1 à 7, **caractérisé en ce que** la conduite (13) est en communication fluide avec un gicleur (17a, 17b) qui débouche dans le volume interne (9) du boîtier (2).

9. Boîtier de relais d'accessoires (1) selon l'une des revendications 1 à 8, **caractérisé en ce que** la conduite (13) est en communication fluide avec au moins un gicleur, qui débouche à proximité d'au moins une roue dentée des engrenages (10).

## Patentansprüche

1. Hilfsgerätegetriebe (1) für eine Turbomaschine bzw. ein Turbotriebwerk mit einem Gehäuse (2), das einen Innenraum (9) begrenzt, in dem Zahnradgetriebe (10) aufgenommen sind, wobei das Gehäuse (2) zwei Seitenflächen (7, 8) aufweist, die entlang einer Achse, die der Achse der Turbomaschine bzw. des Turbotriebwerks entspricht, axial gegeneinander versetzt sind, wobei das Gehäuse (2) zumindest eine Leitung (13) zur Zirkulation von Öl aufweist, die zumindest eine Seitenfläche durchquert und sich in den Innenraum (9) erstreckt,
**dadurch gekennzeichnet, dass** das Gehäuse (2) zumindest einen Ölabweiser (14, 15) aufweist, der sich ausgehend von der Leitung (13) in den Innenraum (9) erstreckt, wobei der Abweiser (14, 15) und die Leitung (13) aus einem Stück gefertigt sind, wobei die Leitung (13) den Innenraum (9) und jede der Seitenflächen (7, 8) axial durchquert.

2. Hilfsgerätegetriebe (1) nach Anspruch 1,
**dadurch gekennzeichnet, dass** sich der Abweiser (14, 15) zwischen zumindest einem Zahnradgetriebe (10) und einer Bodenwand des Innenraums (9) erstreckt.

3. Hilfsgerätegetriebe (1) nach Anspruch 1 oder 2,
**dadurch gekennzeichnet, dass** die aus der Leitung (13) und dem Abweiser (14, 15) gebildete Einheit Mittel (15) zur Drehsicherung der Einheit in Bezug auf das Gehäuse (2) aufweist.

4. Hilfsgerätegetriebe (1) nach Anspruch 3,
**dadurch gekennzeichnet, dass** die Mittel zur Drehsicherung eine Abflachung (15) aufweisen, die an einem Abschnitt (14) der Leitung (13) ausgebildet ist und mit einem komplementär geformten Sicherungsbereich des Gehäuses (2) zusammenwirkt, oder umgekehrt.

5. Hilfsgerätegetriebe (1) nach Anspruch 3,
**dadurch gekennzeichnet, dass** die Mittel zur Drehsicherung eine Schraubbefestigung in einer der Seitenflächen (7, 8) aufweisen.

6. Hilfsgerätegetriebe (1) nach einem der Ansprüche 1 bis 4,
**dadurch gekennzeichnet, dass** die aus der Leitung (13) und dem Abweiser (14, 15) gebildete Einheit zumindest eine Versteifung (16) aufweist, die sich zumindest teilweise über den Abweiser (14, 15) und über die Leitung (13) erstreckt.

7. Hilfsgerätegetriebe (1) nach einem der Ansprüche 1 bis 5,
**dadurch gekennzeichnet, dass** es einen ersten Abweiser (14, 15) und einen zweiten Abweiser (14, 15) aufweist, die sich in entgegengesetzter Richtung auf beiden Seiten der Leitung (13) erstrecken.

8. Hilfsgerätegetriebe (1) nach einem der Ansprüche 1 bis 7,
**dadurch gekennzeichnet, dass** die Leitung (13) in Fluidverbindung mit einer Düse (17a, 17b) steht, die in den Innenraum (9) des Gehäuses (2) mündet.

9. Hilfsgerätegetriebe (1) nach einem der Ansprüche 1 bis 8, **dadurch gekennzeichnet, dass** die Leitung (13) in Fluidverbindung mit zumindest einer Düse steht, die in der Nähe zumindest eines Zahnrads der Zahnradgetriebe (10) mündet.

## Claims

1. An accessory relay housing (1) for a turbine engine including a housing (2) delimiting an inner volume (9) in which gears (10) are housed, the housing (2) including two lateral faces (7, 8) axially offset from one another according to an axis corresponding to the axis of the turbine engine, the housing (2) including at least one oil circulation duct (13) passing through at least one lateral face and extending into said inner volume (9), **characterised in that** the housing (2) includes at least one oil deflector (14, 15) extending, from the duct (13), into said inner volume (9), the deflector (14, 15) and the duct (13) being made in one piece, the duct (13) passing axially through the inner volume (9) and each of the lateral faces (7, 8).

2. The accessory relay housing (1) according to claim 1, **characterised in that** the deflector (14, 15) extends between at least one gear (10) and a lower wall of the inner volume (9).

3. The accessory relay housing (1) according to claim 1 or 2, **characterised in that** the assembly formed by the duct (13) and the deflector (14, 15) includes means (15) for blocking the rotation of the assembly relative to the housing (2).

4. The accessory relay housing (1) according to claim 3, **characterised in that** the rotation blocking means include a flat surface (15) formed over a portion (14) of the duct (13) and cooperating with a blocking area with a complementary shape of the housing (2), or vice versa.

5. The accessory relay housing (1) according to claim 3, **characterised in that** the rotation blocking means include a screw fastening in one of the lateral faces (7, 8).

6. The accessory relay housing (1) according to one of claims 1 to 4, **characterised in that** the assembly formed by the duct (13) and the deflector (14, 15) includes at least one stiffener (16) extending, at least in part, over the deflector (14, 15) and over the duct (13).

7. The accessory relay housing (1) according to one of claims 1 to 5, **characterised in that** it includes a first deflector (14, 15) and a second deflector (14, 15) extending according to an opposite direction on either side of the duct (13).

8. The accessory relay housing (1) according to one of claims 1 to 7, **characterised in that** the duct (13) is in fluid communication with a sprinkle (17a, 17b) which opens into the inner volume (9) of the housing (2).

9. The accessory relay housing (1) according to one of claims 1 to 8, **characterised in that** the duct (13) is in fluid communication with at least one sprinkle, which opens in the proximity of at least one toothed wheel of the gears (10).
